# EUROPEAN PATENT APPLICATION

(11) **EP 1 072 471 A1**
(43) Date of publication of application: **31.01.2001**
(21) Application number: 99122473.4
(22) Date of filing: 11.11.1999
(51) Int. Cl.: B60R 9/06

(54) **Support device fixable to a motor vehicle by using the towing member of the type provided with a removable ball hook**

(30) Priority: 27.07.1999 IT MI991670
(71) Applicant: Ellebi S.r.l., 42040 Santa Vittoria di Gualtieri (Emilia) (IT)
(72) Inventor: Pavesi, Pasquale, 42016 Guastalla (Reggio Emilia) (IT)
(74) Representative: Giambrocono, Alfonso, Dr. Ing.

(57) **Abstract**

The support device is applied to a motor vehicle provided with a towing member comprising a first part fixable to the vehicle, and a removable second part (ball hook) one end of which is shaped as a ball whereas its other end constitutes a portion to be plugged into the first part, and shaped as the plug-in portion of the second part of the towing member.

That part of the support device which is not the plug-in portion is formed as a bicycle carrier, ski carrier, or supplementary package carrier.

## Description

This invention relates to a support device, such as a bicycle carrier, ski carrier or supplementary package carrier, fixable to a motor vehicle by using a towing hook of the type provided with a removable ball hook, with which the vehicle must be provided.

Bicycle carriers are known for fitting to motor vehicles provided with a towing member of the type having that part projecting from the vehicle shaped as a hook terminating with a ball (the so-called ball hook). Such bicycle carriers are fixed to said ball in various ways, all of which require the use of relative adapters of different shapes and sizes. These adapters occupy a determined space below the ball and are generally left attached to it, with consequent problems of poor appearance and obstruction. Moreover, most adapters have a size which can become dangerous in the sense that when the bicycle carrier is not fitted to the adapter but this latter remains attached to the ball of the towing member, it can happen that if walking behind the vehicle without exercising proper care, the legs can collide against the adapter, with unpleasant consequences.

In all cases, tools have to be used to fix the adapter to the ball of the towing member and to remove the adapter from the ball.

Another drawback of bicycle carriers of this type is that precisely because the adapter is fixed to a spherical element it is not able to ensure complete stability of the bicycle carrier applied to the adapter.

Towing members are also known in which the projecting part of the towing member (ie the ball hook) can be easily removed from the vehicle when not required, and can equally easily be reapplied to it when required, this being accomplished without the use of tools. Again in this case the adapter for the known bicycle carrier is fitted to the ball of the removable part of the towing member.

Specifically, this type of towing member comprises a first part which remains permanently fixed to the motor vehicle, and a second part consisting of the removable part (which includes the hooking ball), a portion of the second part being able to be automatically plugged into the first part of the towing member and then locked in position by suitable safety locking means.

The object of this invention is to provide a support device (such as a bicycle carrier, a ski carrier or a package carrier) which can be fixed to a motor vehicle by using a towing member of the type provided with a removable ball hook, with which the vehicle must be provided, such that the support device does not present the aforesaid drawbacks of known bicycle carriers which are applied to the ball of a towing member.

This object is attained by the support device of the invention, for application to a motor vehicle provided with a towing member comprising a first part fixable to the vehicle, and a removable second part (ball hook) one end of which is shaped as a ball whereas its other end constitutes a portion to be plugged into the first part, characterised by comprising a plug-in portion shaped as the plug-in portion of the second part of the towing member.

The following advantages are provided by the invention:
- extremely fast mounting and removal of the device device without using any tools;
- original appearance of the vehicle unchanged when the support device is not mounted, so that there are no dangerous projections;
- maximum reliability in the fixing of the support device to the vehicle, seeing that the towing member is able to withstand stresses normally much higher than those deriving from a bicycle carrier, a ski carrier or a package carrier, the actual anti-release safety devices provided for the towing member being used, these being of high reliability;
- elimination of said adapters, which now represent a surplus piece (fewer pieces, fewer problems), however the plug-in portion of the support device could itself be made removable from the rest of the support device, so that it could be used for a bicycle carrier and/or for a ski carrier and/or for a supplementary package carrier.

In the light of the numerous commercially available types of towing member with a removable ball hook (which can be considerably different from each other), it is considered superfluous to illustrate one or more embodiments of the invention, it being apparent at this point that said plug-in portion of the support device (whether a bicycle carrier, ski carrier or supplementary package carrier) is shaped as the plug-in portion of the particular removable ball hook of the towing member used, this plug-in portion of the support device of the invention being plugged into and locked in position within that part known herein, for whatever model of towing member used, as the first part (that which remains permanently fixed to the motor vehicle) of the towing member used.

## Claims

1. A support device for application to a motor vehicle provided with a towing member comprising a first part fixable to the vehicle, and a removable second part one end of which is shaped as a ball whereas its other end constitutes a portion to be plugged into the first part, characterised by comprising a plug-in portion shaped as the plug-in portion of the second part of the towing member.

2. A support device as claimed in claim 1, wherein that part thereof which is not the plug-in portion is formed as a bicycle carrier.

3. A support device as claimed in claim 1, wherein that part thereof which is not the plug-in portion is formed as a ski carrier.

4. A support device as claimed in claim 1, wherein that part thereof which is not the plug-in portion is formed as a supplementary package carrier.
